Europäisches Patentamt

European Patent Office

Office européen des brevets

(11) Numéro de publication: **0 126 675**
**B1**

(12) **FASCICULE DE BREVET EUROPEEN**

(45) Date de publication du fascicule du brevet: **12.10.88**

(51) Int. Cl.⁴: **C 09 K 3/14**, C 03 C 1/00

(21) Numéro de dépôt: **84400920.9**

(22) Date de dépôt: **04.05.84**

(54) Composition de polissage à base de cérium et son procédé de fabrication.

(30) Priorité: **13.05.83 FR 8308003**

(43) Date de publication de la demande:
**28.11.84 Bulletin 84/48**

(45) Mention de la délivrance du brevet:
**12.10.88 Bulletin 88/41**

(84) Etats contractants désignés:
**AT BE CH DE FR GB IT LI NL SE**

(56) Documents cités:
**EP-A-0 031 749**
**US-A-3 097 083**
**US-A-3 240 580**
**US-A-3 317 293**

(73) Titulaire: **RHONE-POULENC CHIMIE**
**25, quai Paul Doumer**
**F-92408 Courbevoie Cédex (FR)**

(72) Inventeur: **Melard, Pierre**
**39, rue Alfred Nobel**
**F-17140 Lagord (FR)**
Inventeur: **Tastu, Francis Lotissement Les Tamaris**
**Cour des AlouettesNo.1 Lauzières**
**F-17137 Nieul Sur Mer (FR)**

(74) Mandataire: **Dutruc-Rosset, Marie-Claude**
**RHONE-POULENC INTERSERVICES Service Brevets Chimie 25, Quai Paul Doumer**
**F-92408 Courbevoie Cédex (FR)**

**Le dossier contient des informations techniques présentées postérieurement au dépôt de la demande et ne figurant pas dans le présent fascicule.**

Courier Press, Leamington Spa, England.

## Description

La présente invention se rapporte à une composition de polissage à base de cérium, son procédé de fabrication et ses applications au polissage du verre, des matières céramiques et autres matières de type vitreux. plus précisément, l'invention a trait à une nouvelle composition de polissage à base de terres rares.

Parmi les compositions de polissage utilisées actuellement dans l'industrie du verre, celles à base de terres rares, et, en particulier, de cérium s'avèrent généralement les plus performantes.

On connaît divers procédés de fabrication de telles compositions. Ainsi, il a été proposé selon DE-A-2 426 110 de précipiter par l'hydroxyde de sodium une solution aqueuse de sulfate de terres rares en présence de molochite, de filtrer, laver, sécher et calciner le produit résultant pour obtenir la composition de polissage désirée. Un tel procédé ne permet pas d'obtenir des compositions de polissage présentant une efficacité entièrement satisfaisante en raison notamment de l'hétérogénéité, de la structure non définie et de la non reproductibilité des produits obtenus. Ces inconvénients proviennent notamment des conditions opératoires du procédé selon lesquelles la concentration des réactifs évolue au cours de la réaction et ne permet pas d'obtenir des produits définis de façon reproductible; ils proviennent également de l'existence de composés étrangers (molochite) et de la présence de sulfates dont la précipitation par l'hydroxyde de sodium donne des mélanges de produits complexes tels que les sulfates doubles, hydroxysulfates et hydroxydes dont la quantité et la nature peuvent varier au cours de la reaction.

Il a également été proposé (Chemical Abstracts 80, 51688, 1974) de fabriquer des compositions de polissage à base de cérium en précipitant de l'hydroxyde cérique par de l'ammoniaque sur une solution de nitrate de terre rare dans laquelle le cérium a été préalablement oxydé. Un tel procédé nécessite une étape supplémentaire de purification par recristallisation par le nitrate céri-amonique et une reprise de l'oxyde calciné par un acide dilué; les produits obtenus ne possèdent pas une efficacité polissante satisfaisante. Par ailleurs, de telles compositions ne présentent pas des qualités d'homogénéité, de structure et de reproductibilité satisfaisantes.

On connaît, d'après US-A-3 768 989, un procédé de préparation de compositions de polissage par formation d'un précipité de carbonate de terres rares-wollastonite, séparation du précipité et calcination. On connaît également d'après US-A-3 262 766 des compositions de polissage fabriquées par traitement de solutions de carbonates de terres rares du commerce avec de l'acide fluosilicique ou hydroluosilicique. Les compositions de polissage préparées selon les procédés décrits dans ces deux brevets américains présentent des inconvénients analogues à ceux qui ont été décrits ci-dessus pour les compositions du DE-A-2 426 110.

Pour remédier aux inconvénients des procédés précités la demanderesse a proposé selon Fr-A-2 472 601 et EP-A1-0031749 un nouveau procédé de fabrication de compositions de polissage caractérisé en ce qu'il comporte les étapes suivantes:

a) on mélange simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6;

b) on filtre le précipité obtenu;

c) on le sèche;

d) on le calcine.

Ce procédé conduit à l'obtention de compositions qui présentent de bonnes qualités d'homogénéité, de reproductibilité, une bonne tenue en suspension dans l'eau et une bonne efficacité polissante. Cependant, le procédé précédemment décrit ne donne pas entièrement satisfaction car l'anion habituellement utilisé étant le fluorure, on rencontre les problèmes usuels liés à l'emploi du fluorure, notamment celui de la pollution des effluents qu'ils soient liquides ou gazeux.

Le problème qui se pose est donc de trouver une nouvelle composition de polissage qui satisfasse aux impératifs suivants:

être efficace, c'est-à-dire permettre le polissage d'une face de verre généralement doucie, le plus rapidement possible.

être propre, c'est-a-dire ne pas rayer le verre pendant le travail de polissage.

ne pas provoquer de réaction défavorable en surface, c'est-à-dire ne pas être chimiquement trop active vis-à-vis du verre; problème de brûlage, peau d'orange, cloques...

avoir une durée de vie ou longévite très grande, pour être utilisée le plus longtemps possible sans inconvénient.

avoir une bonne tenue en suspension, permettant une répartition homogène de la poudre dans le bain, et évitant les dépots. Cette dispersion doit être effective dès la mise en suspension et pendant tout le temps du travail.

ne pas mousser, les mousses provoquent des débordements, bouchent les tuyauteries, diminuent le rendement et gênent le personnel.

être facile à remettre en suspenion après arrêt prolongé et décantation, même si le bain est chargé en éléments du verre poli: phénomène de "caking".

ne pas être toxique: afin d'éviter tous les problèmes de peaux ou autres maladies.

être un produit régulier, de couleur agréable, facile à employer.

**0 126 675**

ne pas coller au verre après polissage, donc permettre un nettoyage rapide
être facile à floculer, pour élimination des rejets usine.

Un objectif de la présente invention est de pourvoir le domaine technique considéré d'une nouvelle composition répondant aux exigences précitées.

Un autre objectif de l'invention est de fournir une composition qui soit susceptible d'être recyclée dans le verre ou matières de même genre après son utilisation pour leur polissage.

Dans l'exposé qui suit de la présente invention, on entend par l'expression "verre", aussi bien le verre que les matières céramiques et autres matières de type vitreux.

Il a maintenant été trouvé et c'est ce qui constitue l'objet principal de l'invention, une nouvelle composition de polissage susceptible d'être recyclée dans le verre, caractérisée par le fait qu'elle ne contient pas d'ions incompatibles avec la composition du verre et qu'elle comprend de l'oxyde cérique et au moins un oxyde non coloré d'une autre terre rare choisie dans le groupe constitué par les lanthanides et l'yttrium.

L'oxyde d'une terre rare intervenant dans les compositions de l'invention ne doit pas être coloré c'est-à-dire que c'est un produit qui n'absorbe pas dans le spectre visible entre 0,38 et 0,70μm.

Comme oxydes de terres rares convenant à la présente invention, on peut citer l'oxyde de lanthane, samarium, europium, gadolinium, dysprosium, thulium, ytterbium, lutécium et d'yttrium. Ces oxydes sont, généralement sous forme sesquioxyde. On peut également mettre en oeuvre un mélange de ces oxydes. D'une manière préférentielle, on utilise le sesquioxyde de lanthane.

Les proportions d'oxyde cérique et d'oxydes de terres rares dans la composition de polissage de l'invention peuvent varier dans les limites suivantes:

de 40 à 99,5% en poids d'oxyde cérique
de 0,5 à 60% en poids d'oxydes de terres rares.

D'une manière préférée, on choisira une composition de polissage contenant:

de 85 à 98% en poids d'oxyde cérique
de 2 à 15% en poids d'oxydes de terres rares.

Ladite composition est obtenue selon un procédé de fabrication, qui constitue aussi un objet de la présente invention, et qui consiste:

à mélanger simultanément, en continu, une solution de sel de cérium, une solution d'une base choisie dans le groupe formé par l'ammoniaque, l'hydroxyde de sodium et de potassium, et une solution d'au moins un sel d'une terre rare trivalente choisie dans le groupe constitué par les lanthanides et l'yttrium et dont l'oxyde n'est pas coloré: le nombre d'équivalents basiques mis en oeuvre étant supérieur ou égal au nombre d'équivalents cérium et terres rares et le pH du milieu réactionnel étant supérieur à 6;

à filtrer le précipité obtenu,
à le sécher,
à le calciner.

Dans la première étape du procédé, on réalise le mélange des différents réactifs.

La solution de sel de cérium mise en oeuvre selon le procédé de l'invention peut être toute solution aqueuse de sel de cérium à l'état céreux et/ou cérique soluble dans les conditions de l'invention et, notamment, une solution de chlorure céreux ou de nitrate de cérium à l'état céreux ou cérique, ou du mélange des deux.

Le sel de cérium est choisi de telle sorte qu'il ne contienne pas d'impuretés qui puissent se retrouver dans la composition finale, après calcination. Il peut être avantageux de mettre en jeu un sel de cérium présentant un degré de pureté supérieur à 99%.

La concentration de la solution de sel de cérium n'est pas un facteur critique, selon l'invention et elle peut varier dans de larges limites; une concentration comprise entre 0,2 et 4 moles par litre est préférée.

Selon une variante préférée du procédé selon l'invention, on introduit le cérium dans le milieu réactionnel à l'état céreux et on l'oxyde à l'état cérique en ajoutant en continu au mélange réactionnel soit isolément, soit en mélange avec une solution autre que celle contenant la base, un agent oxydant compatible avec ce milieu. Parmi les agents oxydants pouvant convenir, on peut citer notamment des solutions de perchlorate, de chlorate, d'hypochlorite, de persulfate de sodium, de potassium ou d'ammonium, d'eau oxygénée ou l'air, l'oxygène, l'ozone. On peut également oxyder le cérium par voie électrochimique. On utilise de préférence l'eau oxygénée.

La proportion d'agent oxydant par rapport au sel céreux à oxyder peut varier dans de larges limites. Elle est en général supérieure à la stoechiométrie et correspond, de préférence, à un excès compris entre 10 et 40%.

Selon le procédé de l'invention, on ajoute en continu au mélange réactionnel soit isolément, soit en mélange avec la solution de sel de cérium, une solution aqueuse de sel d'au moins une terre rare trivalente choisie dans le groupe constitué par les lanthanides et l'yttrium et ayant pour caractéristique de former un oxyde non coloré. Le sel doit être soluble dans les conditions de l'invention. Parmi les sels convenant bien, on citera notamment les chlorures ou les nitrates de lanthane, samarium, europium, gadolinium, dysprosium, thulium, ytterbium, lutécium et d'yttrium.

La concentration de la solution de sel(s) de terre(s) rare(s) mise en oeuvre selon le procédé de l'invention n'est pas un facteur critique et elle peut varier dans de larges limites; elle r est toutefois, de préférence, comprise entre 0,2 et 4 moles par litre.

3

La proportion entre la solution de sel de cérium et la solution de sel(s) de terre(s) rare(s) est déterminée par régulation des débits respectifs de telle sorte que l'on obtienne la composition souhaitée avec les pourcentages pondéraux de chaque constituant définis ci-dessus.

La solution basique mise en oeuvre selon le procédé de l'invention peut être notamment une solution aqueuse d'ammoniaque ou d'hydroxyde de sodium et de potassium (NH$_4$OH, NaOH, KOH). Selon l'invention, on met en oeuvre de préférence une solution d'ammoniaque. La normalité de la solution basique mise en oeuvre n'est pas un facteur critique selon l'invention, elle peut varier dans de larges limites, elle sera toutefois avantageusement comprise entre 1 et 5 N.

La proportion entre la solution basique et la solution de sel de cérium et de sel(s) de terre(s) rare(s) doit être telle que le nombre d'équivalents basiques introduits soit supérieur ou égal au nombre d'équivalents cérium et terre(s) rare(s) introduits dans le même temps. Il peut être avantageux de mettre en oeuvre un excès supérieur à 5% d'équivalents basiques par rapport aux équivalents cérium et terre(s) rare(s). Le pH du milieu réactionnel qui doit être alors supérieur à 6, ne doit toutefois pas dépasser environ 10. Il est avantageusement compris entre 7 et 9. Il peut être particulièrement avantageux de régler le pH dans ces limites à une valeur constante à ±0,l unité de pH.

On peut réaliser le mélange des différentes solutions des réactifs précités selon de nombreuses variantes. Par exemple, on peut faire le mélange sous agitation en ajoutant en continu et par voie separée la solution de sel de cérium, éventuellement la solution de l'agent oxydant, la solution de sel(s) de terre(s) rare(s) et la solution basique. On peut également effectuer le prémélange de la solution de sel de cérium et de la solution de sel(s) de terre(s) rare(s) qui est ajouté en continu au milieu réactionnel en parallèle avec la solution basique. Dans le cas de l'emploi d'un agent oxydant, il est possible de le mettre en oeuvre en mélange avec la solution de sel de cérium et/ou de la solution de sel(s) de terre(s) rare(s).

Quel que soit l'ordre d'introduction des solutions des réactifs choisi, le mélange s'effectue de manière instantanée: on obtient une concentration dans les diverses espèces présentes bien définie à chaque instant tout au long de la masse réactionnelle. Ceci permet d'obtenir des compositions homogènes, définies et de caractéristiques stables.

La température du milieu réactionnel n'est pas critique et peut être comprise, de préférence, entre 10 et 95°C et, plus particulièrement, entre 20 et 70°C.

Le temps de séjour du mélange dans le milieu réactionnel n'est pas un facteur critique selon l'invention et peut varier dans de larges limites; généralement, on choisira des temps de séjour compris entre 30 minutes et 2 heures.

Selon une autre variante du procédé selon l'invention, la masse réactionnelle peut être mûrie pendant un certain temps à une température comprise entre 10 et 95°C et, de préférence entre 20 et 80°C avant l'opération de filtration. Dans ce cas, le temps de mûrissement n'est pas un facteur critique selon l'invention et peut varier dans de larges limites; toutefois, un temps pouvant aller de 30 minutes jusqu'à 2 heures est généralement satisfaisant. L'opération de mûrissement s'effectue sous agitation.

La deuxième étape du procédé de l'invention, consiste à filtrer après réaction la masse réactionnelle qui se présente sous la forme d'une suspension. Cette opération de filtration est effectuée éventuellement en continu à température ambiante c'est-à-dire à une température comprise entre 10 et 25°C.

Selon une variante du procédé de l'invention, le gâteau de filtration peut être ensuite lavé avec de l'eau. Après ce lavage, la teneur en eau du gâteau est comprise entre 20 et 80% en poids et, généralement, entre 30 et 50%.

Le produit obtenur après filtration et éventuellement lavage est ensuite séché éventuellement en continu. La température de séchage est comprise de préférence entre 100 et 600°C, le temps de séchage variant dans ces conditions de préférence entre 30 minutes et 2 heures.

Le produit sec est ensuite calciné éventuellement en continu à une température comprise entre 600 et 1200°C, de préférence 950° à 1150°C, pendant un temps généralement compris entre 30 minutes et 10 heures.

On réalise ensuite le broyage du produit calciné de telle sorte qu'il présente des dimensions d'agrégats allant de O,2 à 5,O µm. Généralement, la taille des agrégats exprimée par le diamètre moyen varie de O,5 à l,5 µm. On définit le diamètre moyen comme étant un diamètre tel que 50% en poids des agrégats ont un diamètre supérieur ou inférieur au diamètre moyen.

Le broyage peut être accompagné d'une opération de sélection granulométrique qui peut être réalisée simultanément ou successivement.

Une autre variante du procédé de l'invention consiste à réaliser le mélange effectué dans la première étape selon deux voies (1) et (2) qui sont en tout point semblable sauf en ce qui concerne la température réactionnelle: la voie (1) conduit à l'obtention d'un précipité à chaud alors que, selon la voie (2), le précipité est obtenu à froid. On fait ensuite le mélange des précipités obtenus selon la voie (1) et la voie (2) soit avant filtration, soit après filtration.

Plus précisément, la variante d'exécution du procédé de l'invention consiste:

selon une voie (1), à mélanger simultanément, en continu, à une température comprise entre 40 et 95°C une solution de sel de cérium, une solution d'une base choisie dans le groupe formé par l'ammoniaque, l'hydroxyde de sodium et de potassium, et une solution d'au moins un sel d'une terre rare trivalente choisie dans le groupe constitué par les lanthanides et l'yttrium et dont l'oxyde n'est pas coloré: le nombre

4

# 0 126 675

d'équivalents basiques mis en oeuvre étant supérieur au nombre d'équivalents cérium et terre(s) rare(s) et le pH du milieu réactionnel supérieur à 6;

selon une voie (2), à mélanger simultanément, en continu à une température comprise entre 10 et 25°C une solution de sel de cérium, une solution d'une base choisie dans le groupe formé par l'ammoniaque, l'hydroxyde de sodium et de potassium, et une solution d'au moins un sel de terre rare trivalente choisie dans le groupe constitué par les lanthanides et l'yttrium et dont l'oxyde n'est pas coloré:

le nombre d'équivalents basiques mis en oeuvre étant supérieur au nombre d'équivalents cérium et terre(s) rare(s) et le PH du milieu réactionnel supérieur à 6;

à faire le mélange des précipités obtenus selon la voie (1) et la voie (2) soit avant filtration, soit après filtration;

à sécher le mélange obtenu;

à le calciner.

Comme mentionné précédemment, les réactifs mis en oeuvre selon les voies (1) et (2) ont les mêmes caractéristiques et sont utilisés dans les mêmes proportions que celles données pour le mode de réalisation de l'invention exposé en premier lieu.

Les paramétres de procédé sont identiques à la différence près de la température réactionnelle.

La température du milieu réactionnel selon la voie (1) est comprise entre environ 40 et 95°C, de préférence entre environ 40 et 60°C.

Elle est choisie selon la voie (2) dans un intervalle variant de 10 à 25°C environ, de préférence aux environs de 20°C.

Le temps de séjour du mélange préparé selon la voie (1) et la voie (2) dans le milieu réactionnel n'est pas un facteur critique selon l'invention et peut varier dans de larges limites: généralement, on choisira des temps de séjour compris entre 30 minutes et 2 heures.

Les précipités obtenus selon la voie (1) et la voie (2) peuvent être mélangés: soit lorsqu'ils sont sous forme de suspension aqueuse, avant le mûrissement ou après le mûrissement: soit lorsqu'ils sont sous forme de poudre, après la filtration.

Selon une variante du procédé de l'invention, on opère le mûrissement de la masse réactionnelle obtenue selon la voie (1) et la voie (2) qui peut se faire séparément ou ensemble car les conditions de mûrissement peuvent être identiques ou différentes. La masse réactionnelle obtenue selon la voie (1) et la voie (2), (ou qui résulte de leur mélange) peut être mûrie avant l'opération de filtration pendant un certain temps à une température identique ou différente comprise entre 10 et 95°C et, de préférence entre 20 et 70°C. Dans ce cas, le temps de mûrissement n'est pas un facteur critique selon l'invention et peut varier dans de larges limites; toutefois, un temps pouvant aller de 30 minutes jusqu'à 2 heures est généralement satisfaisant, L'opération de mûrissement s'effectue sous agitation.

Conformément à ce mode d'exécution de l'invention, on fait le mélange des deux solutions aqueuses contenant respectivement en suspension, le précipité obtenu par la voie (1) et le précipité obtenu par la voie (2): ledit mélange pouvant être effectué soit avant le mûrissement, soit après le mûrissement.

On effectue ensuite la filtration du mélange obtenu. Cette opération de filtration est réalisée éventuellement en continu à température ambiante c'est-à-dire à une température comprise généralement entre 10 et 25°C. On peut éventuellement soumettre le gâteau de filtration à un lavage avec de l'eau. Après ce lavage, la teneur en eau du gâteau est comprise entre 20 et 80% en poids et généralement entre 30 et 50%.

Selon l'autre variante de réalisation de l'invention, on peut filtrer par voie séparée les masses réactionnelles obtenues selon les voies (1) et (2) après un éventuel mûrissement. La filtration qui peut être suivie d'un lavage éventuel est réalisée dans les mêmes conditions que décrites précédemment. On procède ensuite au mélange des precipités obtenus isolément.

Quel que soit le mode de fabrication choisi du mélange, sa composition n'est pas critique et en général la proportion du précipité obtenu selon la voie (2) apporte dans la composition finale, de 10 à 75% du poids total des terres rares exprimé en oxydes de terres rares, y compris l'oxyde cérique et de préférence de 25 à 75%.

Le produit obtenu selon la voie (1) et la voie (2) après filtration et éventuellement lavage est ensuite séché éventuellement en continu. La température de séchage est comprise de préférence entre 100 et 600°C, le temps de séchage variant dans ces conditions de préférence entre 30 minutes et 2 heures.

Le produit sec est ensuite calciné éventuellement en continu à une température comprise entre 600 et 1200°C, de préférence 950° à 1150°C, pendant un temps généralement compris entre 30 minutes et 10 heures.

On réalise ensuite le broyage du produit calciné dans les mêmes conditions que celles définies précédemment.

Le procédé de l'invention peut être mis en oeuvre dans un appareillage classique.

L'étape de mélange des réactifs s'ettectue dans un réacteur équipé d'un dispositif de chauffage thermorégulé, des moyens usuels de contrôle de réaction (thermomètre), des moyens d'agitation (agitation à ancre ou à hélice), des moyens d'introduction des réactifs et d'une unité de régulation du pH placée à la sortie du réacteur.

L'opération de mûrissement est réalisée dans le même type d'appareillage à la différence près qu'il n'est pas équipé des moyens d'introduction des réactifs et de l'unité de régulation du pH. Le passage de la

5

masse réactionnelle d'un réacteur à l'autre, se fait par gravité.

Ensuite la filtration de la suspension obtenue est conduite sur un dispositif continu de filtration par exemple, un filtre rotatif type Vernay ou un filtre à bande.

Le gâteau de filtration est introduit à l'aide de tout moyen mécanique approprié (râcle) dans le dispositif de sechage-calcination.

Les opérations de séchage et de calcination peuvent être effectuées dans deux appareils distincts ou s'enchaîner dans un seul appareil du type four rotatif. On utilise de préférence un four rotatif légèrement incliné permettant ainsi la circulation de la matière et assurant dans sa première partie, le séchage du produit et dans sa deuxième partie, sa calcination en raison d'un gradient de température plus élevé dû à la proximité de la flamme que l'on alimentera, de préférence avec un gaz naturel.

Après calcination, la composition obtenue peut être soumise à des opérations de finissage qui consistent à un broyage et à une sélection granulométrique qui peuvent être effectués dans le même appareil, par exemple un ensemble microniseur.

La mise en oeuvre de la variante d'exécution de l'invention qui consiste à mélanger des précipités obtenus selon deux voies différentes (1) et (2) peut entraîner une adaptation de l'appareillage utilisé uniquement dans les étapes précédant les opérations de calcination.

L'étape de mélange des réactifs réalisé selon la voie (1) s'effectue dans un réacteur équipé d'un dispositif de chauffage thermorégulé, des moyens usuels de contrôle de réaction (thermomètre), des moyens d'agitation (agitation à ancre ou à hélice), des moyens d'introduction des réactifs et d'une unité de régulation du pH placée à la sortie du réacteur.

L'opération de mûrissement est réalisée dans le même type d'appareillage à la différence près qu'il n'est pas équipé des moyens d'introduction des réactifs et de l'unité de régulation du pH. Le passage de la masse réactionnelle d'un réacteur à l'autre, se fait par gravité.

Le mélange conduit selon la voie (2) se fait dans un réacteur similaire à la seule différence qu'il n'a pas toujours besoin d'être équipé d'un dispositif de chauffage.

Le mûrissement qui suit selon la voie (2) est effectué dans un réacteur identique à celui utilisé pour la voie (1).

Selon un mode d'exécution de l'invention, le mélange des suspensions aqueuses des précipités obtenus selon les voies (1) et (2) peut se faire au niveau d'un réacteur de mûrissement commun aux voies (1) et (2) ou au niveau de l'auge de filtration.

La filtration du mélange des suspensions aqueuses des précipités obtenues selon les voies (1) et (2) ou des précipités obtenus séparément conformément aux voies (1) et (2) est conduite éventuellement en continu sur des dispositifs classiques de filtration par exemple, un filtre rotatif type Vernay ou un filtre à bande.

Le gâteau de filtration est introduit à l'aide de tout moyen mécanique approprié (râcle) dans le dispositif de séchage-calcination.

Suivant l'autre variante de mise en pratique de l'invention, on effectue le mélange des précipités obtenus selon les voies (1) et (2) après filtration, au niveau du dispositif de séchage et/ou de calcination identique à celui décrit ci-dessus.

Après calcination, la composition obtenue peut être soumise aux opérations de finissage réalisées dans l'appareillage précité.

La mise en oeuvre des compositions de l'invention pour le polissage du verre se fait d'une manière classique. Comme elles interviennent généralement dans un système de polissage à l'arrosé, elles sont mises en suspension dans l'eau.

La confection des bains de polissage est réalisée, simplement, par addition de la composition poudre au milieu aqueux mis sous agitation manuellement ou par des moyens classiques d'agitation (agitation à ancre, à hélice ou à turbine etc...).

La quantité de composition introduite est telle que, generalement, la concentration de la composition exprimée en $CeO_2$ varie de 30 à 200 g par litre de bain.

La qualité de l'eau intervenant pour la préparation du bain de polissage ne présente aucun caractère critique mais il est préférable pour avoir une bonne tenue en suspension de la composition de l'invention, d'utiliser une eau douce c'est-à-dire une eau présentant une dureté inférieure à 30° TH.

La température du bain est choisie de telle sorte qu'elle soit inférieure à 50°C. Il est intéressant de travailler à des températures basses de l'ordre 20°C car toute élévation de température accélère la décantation de la suspension.

Les compositions de polissage de l'invention s'avèrent présenter de nombreux avantages:

elles présentent un aspect amélioré: finesse, granulométrie, couleur

elles possèdent de bonnes qualités d'homogénéité et de reproductibilité

elles présentent une surface spécifique qui se situe le plus souvent entre 2 et 10 m²/g et de préférence entre 3 et 8 m²/g. On entend par surface spécifique, la surface B.E.T. déterminée selon la méthode BRUNAUER-EMMETT-TELLER, décrite dans le périodique "The Journal of American Society 1938, 60, 309".

elles ont également des propriétés améliorées: densité et tenue en suspension

elles conduisent à des performances améliorées: efficacité polissante, rapidité de polissage, faible taux de rebut des pièces polies, etc...

Les compositions obtenues selon le procédé de l'invention sont applicables au polissage du verre ou des matières du même genre.

Elles peuvent être utilisées en particulier dans le domaine de la lunetterie, série ou production de masse et également en lunetterie de prescription.

Un domaine d'application privilégié desdites compositions est l'industrie du verre qui regroupe la cristallerie, la glacerie, le verre plat notamment vitrage et double-vitrage, les rétroviseurs d'automobile et les écrans de télévision.

L'emploi des compositions de l'invention est particulièrement avantageux du fait qu'elles peuvent être recyclées dans le verre lorsqu'elles sont usagées et qu'elles ont subi une diminution de leur efficacité polissante. Généralement, elles se sont chargées de 10 à 15% en poids exprimés en matières sèches d'éléments exogènes (verre enlevé).

On récupère la composition de polissage usagée qui est en suspension dans le bain de polissage par toute technique de séparation liquide-solide, par exemple, centrifugation ou floculation-filtration. Dans ce dernier cas, on peut faire appel aux agents floculants classiques de préférence, minéraux: sulfate ferrique, hydroxychlorure d'aluminium etc...

Cette aptitude au recyclage peut représenter une économie de matière première non négligerable, d'autant plus que la consommation de l'oxyde cérique dans l'industrie du verre ne cesse de s'accroître pour les raisons suivantes:

La décoloration chimique du verre consiste à ajouter au verre un agent oxydant qui fait passer le fer de l'état $FeO$ à l'état $Fe_2O_3$, beaucoup moins colorant. L'oxydation est réalisée par des agents de décoloration classiques tels que $As_2O_5$, $Sb_2O_5$. La tendance actuelle est de les remplacer par l'oxyde cérique car ce dernier présente le gros avantage de ne pas être toxique.

Par ailleurs, les quantités employées d'oxyde cérique sont beaucoup plus importantes lors de la fabrication des écrans de télévision. En effet, il est connu que l'oxyde cérique joue un rôle de protection contre les rayons X et les rayons α si bien qu'il est couramment utilisé à raison de 0,5 à 3% du poids du verre. En conséquence, le gain réalisé par le recyclage dans les écrans de télévision des compositions de l'invention est fort appréciable.

Les compositions de l'invention ne possèdant aucun ion susceptible d'interférer avec la composition du verre peuvent donc avantageusement servir ensuite comme source d'oxyde cérique.

Suivent des exemples qui illustrent la préparation de compositions de polissage selon l'invention.

Les compositions de polissage des exemples 1 et 2 à base d'oxyde cérique et d'oxyde de lanthane sont préparées selon le mode général de préparation de l'invention alors que celle décrite dans l'exemple 3 illustre la variante d'exécution faisant intervenir dans la première étape, le mélange des réactifs selon deux voies (1) et (2).

Les différentes compositions obtenues sont alors soumises à des tests ci-après qui mettent en évidence leurs propriétés physico-chimiques et leur efficacité polissante.

## EXEMPLE 1.

Préparation d'une composition de polissage de l'invention (A) ayant la composition pondérale suivante:

| | |
|---|---|
| oxyde cérique | 92% |
| sesquioxyde de lanthane | 8% |

La composition ne contient pas d'anions fluorure et la quantité de terres rares colorantes est très faible (moins de 1% exprimé en poids d'oxydes de terres rares).

Elle est préparée de la manière qui suit:

a) on introduit respectivement dans deux pots de prémélange de 250 cm³ équipés d'un système d'agitation:

dans l'un:

une solution aqueuse d'ammoniaque 3N et

dans l'autre:

une solution aqueuse contenant 1 mole par litre d'oxydes de terres rares: à savoir du nitrate cérique et du nitrate de lanthane en quantités telles que l'on obtienne 92% d'oxyde cérique et 8% d'oxyde de lanthane.

et une solution aqueuse d'eau oxygénée à 200 volumes, la proportion d'eau oxygénée par rapport au sel céreux est en excès de 35%.

Dans un réacteur de 2 litres thermorégulé, équipé d'un système d'agitation et d'une unité de régulation de pH placée à sa sortie, on introduit simultanément et en continu, les deux solutions à un débit tel que le pH de l'unité de régulation soit réglé sur pH=7,8.

Le réacteur fonctionne à 50°C: le temps de séjour est de 1 heure.

La masse réactionnelle passe par gravité dans un réacteur similaire où a lieu le mûrissement à une température de 75°C pendant un temps de séjour de 1 heure.

b) on filtre le précipité obtenu à 22°C sur filtre rotatif de type VERNAY.

c) on effectue ensuite le séchage et la calcination du précipité dans un four rotatif dont la température s'échelonne de 100°C à l'entrée jusqu'à 1090°C à la sortie ce qui représente environ 2 heures de séchage entre 100 et 600°C et 3 heures de calcination de 600°C à 1090°C.

7

d) on obtient un produit (A) qui est fini par passage dans un microniseur qui réalise simultanément un broyage et une sélection granulométrique à l'aide d'un courant d'air.

## EXEMPLE 2.

Préparation d'une composition de polissage de l'invention (B) ayant la composition pondérale suivante:

oxyde cérique 92%
sesquioxyde de lanthane 8%

La composition ne contient pas d'anions fluorure et la quantité de terres rares colorantes est très faible (moins de 1% exprimé en poids d'oxydes de terres rares).

Elle est préparée en mettant en oeuvre les solutions décrites dans l'exemple 1 selon le mode opératoire suivant:

a) dans un réacteur tel que décrit précédemment on introduit simultanément et en continu les deux solutions à un débit tel que le pH de l'unité de régulation soit réglé sur pH = 7,6.

Le réacteur fonctionne à 20°C: le temps de séjour est de 1 heure.

La masse réactionnelle passe par gravité dans un réacteur similaire où a lieu le mûrissement à une température de 20°C pendant un temps de séjour de 1 heure.

b) on filtre le précipité obtenu à 22°C sur filtre rotatif de type VERNAY.

c) on effectue ensuite le séchage et la calcination du précipité dans un four rotatif dont la température s'échelonne de 100°C à l'entrée jusqu'à 1100°C à la sortie ce qui représente environ 2 heures de séchage entre 100 et 600°C et 3 heures de calcination de 600°C à 1100°C.

d) on obtient un produit (B) qui est fini par passage dans un microniseur qui réalise un broyage et une sélection granulométrique à l'aide d'un courant d'air.

## EXAMPLE 3.

Préparation d'une composition de polissage de l'invention (C) ayant la composition pondérale suivante:

oxyde cérique 92%
sesquioxyde de lanthane 8%

La composition ne contient pas d'anions fluorure et la quantité de terres rares colorantes est très faible (moins de 1% exprimé en poids d'oxydes de terres rares).

Elle est préparée de la manière qui suit:

a) Selon la voie (1), on réalise la préparation d'un précipité à chaud qui est ensuite mûri puis filtré.

Pour ce faire, on introduit respectivement dans deux pots de prémélange de 250 cm³ équipés d'un système d'agitation:

dans l'un:

une solution aqueuse d'ammoniaque 3N et

dans l'autre:

une solution aqueuse contenant 1 mole par litre d'oxydes de terres rares: à savoir du nitrate cérique et du nitrate de lanthane en quantités telles que l'on obtienne 92% d'oxyde cérique et 8% d'oxyde de lanthane.

et une solution aqueuse d'eau oxygénée à 200 volumes, la proportion d'eau oxygénée par rapport au sel céreux est en excès de 35%.

Dans un réacteur de 2 litres thermorégulé, équipé d'un système d'agitation et d'une unité de régulation de pH placée à sa sortie, on introduit simultanément et en continu, les deux solutions à un débit tel que le pH de l'unité de régulation soit réglé sur pH = 7,8.

Le réacteur fonctionne à 50°C: le temps de séjour est de 1 heure.

La masse réactionnelle passe par gravité dans un réacteur similaire où a lieu le mûrissement à une température de 75°C pendant un temps de séjour de 1 heure.

On effectue ensuite la filtration du précipité obtenu selon la voie (1) à 22°C sur un filtre rotatif de type VERNAY.

b) Selon la voie (2), on réalise la préparation d'un précipité à froid qui est ensuite mûri puis filtré.

D'une manière identique, on introduit respectivement dans deux pots de prémélange de 250 cm³ équipés d'un système d'agitation.

dans l'un:

une solution aqueuse d'ammoniaque 3N et

dans l'autre:

une solution aqueuse contenant 1 mole par litre d'oxydes de terres rares: à savoir du nitrate cérique et du nitrate de lanthane en quantités telles que l'on obtienne 92% d'oxyde cérique et 8% d'oxyde de lanthane.

et une solution aqueuse d'eau oxygénée à 200 volumes, la proportion d'eau oxygénée par rapport au sel céreux est en excès de 35%.

Dans un réacteur de 2 litres équipé d'un système d'agitation et d'une unité de régulation de pH placée à sa sortie, on introduit simultanément et en continu, les deux solutions à un débit tel que le pH de l'unité de régulation soit réglé sur pH = 7,6.

La température dans le réacteur est de 20-22°C et le temps de séjour est de 1 heure.

8

La masse réactionnelle passe par gravité dans un réacteur similaire où a lieu le mûrissement à une température de 70°C pendant un temps de séjour de 1 heure.

On effectue ensuite la filtration du précipité obtenu selon la voie (2) à 22°C sur un filtre rotatif du type VERNAY.

c) On fait le mélange des précipités obtenus selon les voies (1) et (2) au niveau de l'entrée du dispositif de séchage et de calcination. La proportion du précipité obtenu selon la voie (2) est telle que ledit précipité apporte dans la composition finale 25% du poids total des terres rares exprimé en oxydes y compris l'oxyde cérique.

d) on effectue ensuite le séchage et la calcination du mélange des précipités dans un four rotatif dont la température s'échelonne de 100°C a l'entrée jusqu'à 1090°C à la sortie ce qui représente environ 2 heures de séchage entre 100 et 600°C et 3 heures de calcination de 600°C à 1090°C.

e) on obtient un produit (C) qui est fini par passage dans un microniseur qui réalise simultanément un broyage et une sélection granulométrique à l'aide d'un courant d'air.

Les compositions de polissage (A), (B), (C) obtenues respectivement selon les exemples 1, 2 et 3 sont ensuite soumises afin de les caractériser aux différents tests physico-chimiques suivants:

1) densité apparente tassée

Elle est déterminée conformément à la norme DIN 53 194. Le principe de la méthode est d'introduire une quantité connue du produit en poudre dans une éprouvette graduée et de la soumettre à un tassement dans des conditions déterminées.

Les résultats obtenus sont les suivants:

|  | $d_A$ |
|---|---|
| composition (A) | $1,6 \pm 0,2$ |
| composition (B) | $1,7 \pm 0,2$ |
| composition (C) | $1,7 \pm 0,2$ |

2) masse volumique vraie

Elle est mesurée à l'aide d'un pycnomètre à gaz Micromeritics modèle 1302 qui donne le volume absolu d'une masse connue de la composition à tester.

La masse volumique vraie des trois compositions est $\rho = 7,2 \pm 0,1$ g/cm³.

3) granulométrie:

Pour déterminer la granulométrie de chaque composition, on prépare 40 cm³ d'une suspension de la composition à analyser à raison de 12 g par litre d'eau distillée contenant 1 g/l d'hexamétaphosphate de sodium.

On réalise ensuite le délitage des agglomérats aux ultra-sons générés par un appareil ultra-sons ANNEMASSE (puissance de 80 watts et fréquence 26 KHZ). L'opération dure 5 minutes.

On effectue ensuite l'analyse granulométrique à l'aide de l'instrument SEDIGRAH 5000 D.

Cet appareil mesure le taux de sédimentation des particules en suspension et présente automatiquement ces résultats en une distribution en pourcentages cumulatifs en fonction des diamètres équivalents sphériques (Basée sur la loi de Stokes).

L'appareil détermine, par le truchement d'un faisceau de rayons X très fin, la concentration en particules retenues en suspension à différentes hauteurs de sédimentation, comme une fonction du temps. Le logarithme de l'intensité du rayon X est électroniquement généré et enregistré puis présenté linéairement en "pourcentages cumulatifs" (en plus petits que) sur l'axe Y d'un enregistreur XY. Pour limiter le temps requis par l'analyse, la cellule de sédimentation est continuellement en mouvement de sorte que la profondeur de la cellule de sédimentation est inversement proportionnelle au temps. Le mouvement de la cellule est synchronisé avec l'axe des X de l'enregistreur, pour indiquer directement le diamètre équivalent sphérique correspondant au temps écoulé à une profondeur de sédimentation donnée, l'information de la dimension est présentée sur une feuille logarithmique à 3 modules.

Pour chaque composition, on donne dans le tableau ci-après, les diamètres moyens obtenus:

# 0 126 675

|  | $d_{50}$ en µm |
|---|---|
| composition (A) | $0,5 \pm 0,25$ |
| composition (B) | $0,8 \pm 0,25$ |
| composition (C) | $0,7 \pm 0,25$ |

Les écarts-types $e_1$ et $e_2$ qui sont respectivement les rapports

$$\frac{d_{84}}{d_{50}} \quad et \quad \frac{d_{50}}{d_{16}}$$

sont:

|  | $e_1$ | $e_2$ |
|---|---|---|
| composition (A) | 4 | 3 |
| composition (B) | 3,5 | 3 |
| composition (C) | 4 | 3 |

4) surface spécifique

Les compositions de polissage présentent une surface spécifique déterminée selon la méthode BET égale à

|  | surface spécifique en $m^2/g$ |
|---|---|
| composition (A) | $6,0 \pm 0,5$ |
| composition (B) | $5,0 \pm 0,5$ |
| composition (C) | $5,5 \pm 0,5$ |

5) tenue en suspension

Dans une éprouvette de 250 cm3, on introduit la suspension de la composition à tester à raison de 50 g/l soit 12,5 g de poudre dans 250 cm3 d'eau ayant une dureté de 28°TH et une température de 20°C. Après homogénéisation complète de la suspension, on suit la vitesse de décantation à l'aide d'un densimètre (graduation de 1000 à 1100) en fonction du temps. On peut tracer la courbe d = f(t).

Le $T_{50}$ est l'expression chiffrée du comportement du produit quant à sa faculté de tenir en suspension. C'est le temps, exprimé en minutes décimales au bout duquel la valeur mesurée est la moyenne entre la densité initiale et la densité finale de la liqueur claire.

Le $T_{50}$ des compositions (A), (B), (C) est égal à 3 minutes + O,5.

6) le compactage initial

Cette notion découle chronologiquement de la tenue en suspension. En effet, que le produit soit assisté ou non, il finit toujours par décanter. Les utilisateurs préparent souvent leur suspension à l'avance, à la

10

concentration désirée, et la stockent en attendant sa mise en service sur les machines. Un laps de temps, pouvant atteindre plusieurs jours, s'écoule entre la préparation de la suspension et son utilisation, temps pendant lequel il y a décantation. Se produisent alors deux cas de figures:

ou le décantat forme une couche expansée, impalpable.

ou bien la partie qui repose au fond du réservoir revêt un aspect boueux, collant, voire même celui d'un véritable béton.

La remise en suspension du produit est instantanée et complète dans le premier cas, et la concentration programmée est retrouvée. S'il y a par contre compactage du produit comme dans le deuxième cas, une partie seulement du produit se remet en suspension, entraînant un appauvrissement du bain en composition de polissage. Dans des cas extrêmes, le compactage atteint des proportions telles qu'il est impossible de décoller le produit du fond du réservoir. Il s'en suit une perte importante de produit neuf devenu inutilisable.

Pour apprécier la tendance ou non au compactage, on réalise le test suivant qui consiste à préparer dans un seau, 5 litres de suspension bien homogénéisée par dispersion de 100 g de composition à tester par litre d'eau de ville. Au bout de 24 heures, on "évalue manuellement" l'état de la partie décantée. Deux autres déterminations sont faites à 48 et 72 heures. Faute de pouvoir chiffrer une sensation tactile, on évalue l'importance du compactage suivant le barème suivant: pas de compactage, compactage léger, compactage.

On note un très léger compactage avec les trois compositicns (A), (B), (C).

7) indice de caking

Bien que leurs effets soient similaires tant dans leur déroulement que dans les inconvénients qu'ils apportent, il convient de dissocier le compactage du caking. Le compactage s'entend pour du produit frais. Le caking, en revanche, apparaît dans les machines, en cours ou après que le produit ait travaillé.

Dans le cas d'un polissage sous conditions dures (grande vitesse, fortes pressions), la composition de polissage subit une usure mécanique notable: cassage des agglomérats, glissement de la granulométrie vers les fines. La suspension s'enrichit d'autre part en particules exogènes (silicates provenant du verre enlevé). La conjugaison de ces deux facteurs fait que, lorsqu'en fin de journée ou en fin de semaine, comme c'est souvent le cas, les machines sont arrêtées, le produit décante dans les réservoirs et tuyauteries sous forme d'une boue consistante et collante. Il y a formation de caking. La remise en suspension au redémarrage est alors malaisée, ou, dans le pire des cas, impossible.

Pour déterminer l'indice de caking, on recueille dans un bécher inox, la suspension ayant servi à la mise en forme du polissoir (cf. test suivant). Après un repos de 24 heures entraînant la décantation, on procède par une agitation mécanique contrôlée (250 t/mn, 5 mn) à la remise en suspension du produit. Le surnageant est alors jeté, puis le bécher mis à l'étuve pour séchage de la fraction non remise en suspension. L'indice de caking (IC) est le pourcentage que représente cette fraction, par rapport à la quantité de composition mise en oeuvre au départ.

On obtient les indices de caking IC suivants:

|  | IC en % |
|---|---|
| composition (A) | 25 |
| composition (B) | 30 |
| composition (C) | 25 |

8) efficacité polissante

Le test est conduit avec différents types de polissoir: mousse de polyuréthane, feutre et Pellon.

a) efficacité sur mousse de polyuréthane

On utilise une machine industrielle CMV modèle ICM 7 équipée de deux broches et d'une tête de polissage convexe. Une pompe alimente la surface de verre à polir à l'aide de la suspension de la composition de polissage à tester.

11

Les conditions opératoires sont les suivantes:

| | |
|---|---|
| vitesse de la tête | 1500 tours/mn |
| vitesse des broches | 1000 tours/mn |
| pression | 1200 g/cm$^2$ |
| concentration de la suspension | 50 g/l |
| dureté de l'eau | 28° TH |
| température | 20°C |
| polissoir | en mousse de polyuréthane MPU LP 46 (épaisseur 1,3 mm) |
| verre à polir | Crown blanc |
| diamètre | 55 mm |
| débit de la pompe | 3,8 à 4 l/mn |
| durée de l'essai | 3 mn |
| durée totale du test | 60 mn |

Les faces concaves des deux éprouvettes de verre sont travaillées ensemble pendant 3 minutes au bout desquelles l'enlèvement de matière est déterminée par pesée. On répète l'essai sur une durée de 1 heure.

Le poids moyen enlevé est ramené à

unité de poids: le mg

unité de surface: le dm$^2$

unité de temps: la mn

On trace la courbe d'efficacité polissante en fonction du temps de travail.

A partir de cette courbe, on exprime l'efficacité polissante comme la moyenne des 10 premiers résultats.

Les résultats obtenus sont les suivants:

| | efficacité polissante sur MPU en mg/dm$^2$/mn |
|---|---|
| composition (A) | 340 |
| composition (B) | 340 |
| composition (C) | 340 |

b) efficacité sur feutre

On conduit les essais sur une machine COBURN 603 à une seule broche et dont le polissoir en feutre est arrosé uniformément par la composition à tester.

Les conditions opératoires sont les suivantes:

| | |
|---|---|
| vitesse du polissoir | 550 tours/mn |
| vitesse de la broche | identique car la broche est entraînée par le polissoir |
| pression | 250 g/cm$^2$ |
| concentration de la suspension | 50 g/l |
| dureté de l'eau | 28°TH |
| température | 20°C |
| polissoir | en feutre (type Blu-Streak) |
| verre à polir | Crown blanc |
| débit de la turbine | 1,2 à 1,4 l/mn |
| durée de l'essai | 15 mn |
| durée totale du test | 1 h 30 |

L'expression de l'efficacité polissante est en tout point identique à celle décrite précédemment pour la machine CMV.

12

On détermine l'efficacité polissante au plateau d'efficacité c'est-à-dire la moyenne des essais de 45 mn à 1h30.

On obtient les efficacités polissantes suivantes:

| | efficacité polissante sur feutre en $mg/dm^2/mn$ |
|---|---|
| composition (A) | 40 |
| composition (B) | 44 |
| composition (C) | 40 |

c) efficacité sur Pellon

On effectue le test sur la machine COBURN précitée. Le polissoir utilisé est un Pellon autoadhésif fabriqué par la Société HARTFELT et collé sur un outil plan.

Les conditions opératoires sont les suivantes:

| | |
|---|---|
| vitesse du polissoir | 550 tours/mn |
| vitesse de la broche | identique car la broche est entraînée par le polissoir |
| pression | $250\ g/cm^2$ |
| concentration de la suspension | 50 g/l |
| dureté de l'eau | 28°TH |
| température | 20°C |
| polissoir | Pellon |
| verre à polir | Crown blanc |
| débit de la turbine | 1,2 à 1,4 l/mn |
| duree de l'essai | 15 mn |
| durée totale du test | 3 h |

On détermine l'efficacité polissante en effectuant la moyenne des efficacités obtenues à 30, 45 et 60 minutes.

Les efficacités polissantes obtenues sont données ci-après:

| | efficacité polissante sur Pellon en $mg/dm^2/mn$ |
|---|---|
| composition (A) | 50 |
| composition (B) | 54 |
| composition (C) | 50 |

Afin de comparer les caractéristiques des compositions de polissage et d'en apprécier leurs performances, on donne le profil d'une composition de polissage classique qui est sur le marché sous la dénomination Cérox 1650 qui a la composition suivante:

| | |
|---|---|
| oxydes de terres rares | 94% |
| oxyde cérique: | 66% |
| oxyde de lanthane: | 19% |
| oxyde de néodyme: | 9% |
| oxyde de praséodyme: | < 0,0001% |
| fluorure exprimé en F$^-$ | 4% |
| phosphate exprimé en P$_2$O$_5$ | 4% |
| densité apparente tassée | $d_A = 1,6 \pm 0,2$ |
| masse volumique vraie | $\rho = 6,55 \pm 0,1 \text{ g/cm}^3$ |
| granulométrie | $d_{50} = 1,5 \ \mu\text{m} \pm 1$ |
| tenue en suspension | $T_{50} = 3$ minutes |
| compactage initial | pas de compactage |
| indice de caking | IC = 40% |
| efficacité polissante | |
| efficacité sur mousse de polyuréthane | $= 370 \text{ mg/dm}^2/\text{mn}$ |
| efficacité sur feutre | $= 38 \text{ mg/dm}^2/\text{mn}$ |
| efficacité sur Pellon | $= 44 \text{ mg/dm}^2/\text{mn}$ |

**Revendications**

1. Composition de polissage à base de cérium susceptible d'être recyclée dans le verre obtenue selon un procédé qui consiste:
à mélanger simultanément, en continu, une solution de sel de cérium, une solution d'une base choisie dans le groupe formé par l'ammoniaque, l'hydroxyde de sodium et de potassium et une solution d'au moins un sel d'une terre rare trivalente choisie dans le groupe constitué par les lanthanides et l'yttrium et dont l'oxyde n'est pas coloré: le nombre d'équivalents basiques mis en oeuvre étant supérieur ou égal au nombre d'équivalents cérium et terre(s) rare(s) et le pH du milieu réactionnel étant supérieur à 6;
à filtrer le précipité obtenu,
à le sécher,
à le calciner.

2. Composition selon la revendication 1 caractérisée par le fait qu'elle est obtenue selon un procédé dans lequel la solution de sel de cérium est une solution aqueuse de chlorure céreux, de nitrate céreux, de nitrate cérique ou de leur mélange.

3. Composition selon l'une des revendications 1 et 2, caractérisée par le fait qu'elle est obtenue selon un procédé dans lequel la concentration de la solution de sel de cérium est comprise entre 0,2 et 4 moles par litre.

4. Composition selon l'une des revendications 1 à 3, caractérisée par le fait qu'elle est obtenue selon un procédé dans lequel on introduit le cérium dans le milieu réactionnel à l'état céreux et on l'oxyde à l'état cérique en ajoutant en continu au milieu réactionnel, soit isolément, soit en mélange avec une solution autre que celle contenant la base, un agent oxydant.

5. Composition selon la revendication 4, caractérisée par le fait qu'elle est obtenue selon un procédé dans lequel la solution de l'agent oxydant est choisie parmi le groupe comportant des solutions de perchlorate, chlorate, d'hypochlorite, de persulfate de sodium, de potassium ou d'ammonium; d'eau oxygénée; l'air, l'oxygène, l'ozone ou l'oxydation électrochimique.

6. Composition selon l'une des revendications 4 et 5, caractérisée par le fait que la proportion d'agent oxydant par rapport au sel céreux est en excès d'environ 10 à 40 % par rapport à la stoechiométrie.

7. Composition selon la revendication 1, caractérisée par le fait que l'on apporte au milieu réactionnel en continu, soit isolément, soit en mélange avec une autre solution, la solution aqueuse de sel d'au moins une terre rare trivalente choisie dans le groupe constitué par les lanthanides et l'yttrium.

8. Composition selon la revendication 7, caractérisée par le fait que solution aqueuse de sel d'au moins une terre rare trivalente est choisie parmi le groupe constitué par les chlorures ou les nitrates de lanthane, samarium, europium, gadolinium, dysprosium, thulium, ytterbium, lutécium et d'yttrium.

9. Composition selon l'une des revendications 7 et 8, caractérisée par le fait que la concentration de la solution aqueuse de sel(s) de terre(s) rare(s) trivalente(s) est comprise entre 0,2 et 4 moles par litre.

10. Composition selon la revendication 1, caractérisée par le fait que l'on met en oeuvre un excès supérieur à environ 5 % d'équivalents basiques par rapport aux équivalents cérium et terre(s) rare(s).

11. Composition selon l'une des revendications 1 et 10, caractérisée par le fait que le pH du milieu réactionnel est compris entre 6 et 10.

12. Composition selon la revendication 11, caractérisée par le fait que le pH du milieu réactionnel est compris entre 7 et 9.

13. Composition selon l'une des revendications 11 et 12, caractérisée par le fait qu'elle est obtenue

14

0 126 675

selon un procédé dans lequel le pH du milieu réactionnel est réglé dans ces limites à une valeur constante à ± O,1 unité de pH.

14. Composition selon l'une des revendications 1 à 13, caractérisée par le fait qu'elle est obtenue selon un procédé dans lequel le temps de séjour du mélange dans le milieu réactionnel est compris entre environ 30 minutes et 2 heures

15. Composition selon l'une des revendications 1 à 14, caractérisèe par le fait qu'elle est obtenue selon un procédé dans lequel la température du milieu réactionnel est comprise entre 10 et 95°C.

16. Composition selon la revendication 15, caractérisée par le fait que la température du milieu réactionnel est comprise entre 20 et 70°C.

17. Composition selon l'une des revendications 1 à 16, caractérisée par le fait qu'elle est obtenue selon un procédé dans lequel on opère le mûrissement de la masse réactionnelle avant l'opération de filtration à une tempèrature comprise entre 10 et 95°C pendant un temps pouvant aller de 30 minutes à 2 heures.

18. Composition selon la revendication 17, caractérisée par le fait que la température de mûrissement est comprise entre 20 et 80°C.

19. Composition selon l'une des revendications 1 à 18, caractérisée par le fait qu'elle est obtenue selon un procédé dans lequel on effectue un lavage du gâteau de filtration avec de l'eau: la teneur en eau du gâteau est comprise après ce lavage entre environ 20 et 80 % en poids.

20. Composition selon l'une des revendications 1 à 14 caractérisée par le fait qu'elle est obtenue selon un procédé qui consiste:

selon une voie (1), à mélanger simultanément, en continu, à une température comprise entre 40 et 95°C une solution de sel de cérium, une solution d'une base choisie dans le groupe formé par l'ammoniaque, l'hydroxyde de sodium et de potassium, et une solution d'au moins un sel d'une terre rare trivalente choisie dans le groupe constitué par les lanthanides et l'yttrium et dont l'oxyde n'est pas coloré: le nombre d'équivalents basiques mis en oeuvre étant supérieur au nombre d'équivalents cérium et terre(s) rare(s) et le pH du milieu réactionnel supérieur à 6;

selon une voie (2), à mélanger simultanément, en continu à une température comprise entre 10 et 25°C une solution de sel de cérium, une solution d'une base choisie dans le groupe formé par l'ammoniaque, l'hydroxyde de sodium et de potassium, et une solution d'au moins un sel d'une terre rare trivalente choisie dans le groupe constitue par les lanthanides et l'yttrium et dont l'oxyde n'est pas colore: le nombre d'équivalents basiques mis en oeuvre étant superieur au nombre d'équivalents cérium et terre(s) rare(s) et le pH du milieu ràactionnel supérieur à 6;

à faire le mélange des précipités obtenus selon la voie (1) et la voie (2) soit avant filtration, soit après filtration;

à sécher le mélange obtenu;

à le calciner.

21. Composition selon l'une des revendications 1 à 14 et 20, caractérisée par le fait que'elle est obtenue selon un procédé dans lequel la température du milieu réactionnel est comprise entre 40 et 60°C selon la voie (1).

22. Composition selon l'une des revendications 1 à 14, 20 et 21, caractérisée par le fait qu'elle est obtenue selon un procédé dans lequel la température du milieu réactionnel est aux environs de 20°C selon la voie (2).

23. Composition selon l'une des revendications 1 à 14 et 20 à 22, caractérisée par le fait qu'elle est obtenue selon un procédé dans lequel l'on opère le mûrissement de la masse réactionnelle obtenue selon la voie (1) et la voie (2) ou qui résulte de leur mélange à une température comprise entre 10 et 95°C pendant un temps pouvant aller de 30 minutes à 2 heures.

24. Composition selon la revendication 23, caractérisée par le fait qu'elle est obtenue selon un procédé dans lequel la température de mûrissement est comprise entre 20 et 70°C.

25. Composition selon l'une des revendications 1 à 14 et 20 à 24, caractérisée par le fait qu'elle est obtenue selon un procédé dans lequel on fait le mélange des deux suspensions aqueuses des précipités obtenus selon les voies (1) et (2) soit avant mûrissement, soit après mûrissement, de telle sorte que la proportion du précipité obtenu selon la voie (2) apporte dans la composition finale de 10 à 75 % du poids total des terres rares exprimé en oxydes.

26. Composition selon la revendication 25 caractérisée par le fait qu'elle est obtenue selon un procédé dans lequel on fait le mélange des deux suspensions aqueuses des précipités obtenus selon les voies (1) et (2) soit avant mûrissement, soit après mûrissement de telle sorte que la proportion de précipité obtenu selon la voie (2) apporte dans composition finale de 25 à 75% du poids total des terres rares exprimé en oxydes.

27. Composition selon l'une des revendications 1 à 14 et 20 à 26, caractérisée par le fait qu'elle est obtenue selon un procéde dans lequel on effectue la filtration éventuellement en continu à température ambiante du mélange des suspensions aqueuses des précipités obtenus selon les voies (1) et (2) ou que l'on procède à la filtration par voie séparée des suspensions aqueuses des précipités obtenus selon les voies (1) et (2).

28. Composition selon la revendication 27 caractérisée par le fait qu'elle est obtenue selon un procédé dans lequel on effectue un lavage du gâteau de filtration avec de l'eau: la teneur en eau du gâteau est comprise après ce lavage entre environ 20 et 80 % en poids.

15

**0 126 675**

29. Composition selon l'une des revendications 1 à 14, 20 à 24, 27 et 28, caractérisée par le fait qu'elle est obtenue selon un procédé dans lequel on fait le mélange des précipités obtenus selon les voies (1) et (2), filtrés et éventuellement lavés par voie séparée, de telle sorte que la proportion du précipité obtenu selon la voie (2) apporte dans la composition finale de 10 à 75 % du poids total des terres rares exprimé en oxydes.

30. Composition selon la revendication 29 caractérisée par le fait qu'elle est obtenue selon un procédé dans lequel on fait le mélange des précipités obtenus selon les voies (1) et (2), filtrés et éventuellement lavés par voie séparée, de telle sorte que la proportion du précipité obtenu selon la voie (2) apporte dans la composition finale 25 à 75 % du poids total des terres rares exprimé en oxydes.

31. Composition selon l'une des revendications 1 à 30 caractérisée par le fait qu'elle est obtenue selon un procédé dan lequel on effectue l'étape de séchage éventuellement en continu, à une température comprise entre environ 100 et 600°C pendant une durée de 30 minutes à 2 heures.

32. Composition selon l'une des revendications 1 à 31, caractérisée par le fait qu'elle est obtenue selon un procédé dans lequel on effectue l'étape de calcination, éventuellement en continu, à une température comprise entre environ 600 et 1200°C pendant une durée d'environ 30 minutes à 10 heures.

33. Composition selon la revendication 32 caractérisée par le fait qu'elle est obtenue selon un procédé dans lequel la température de calcination est comprise entre 950° et 1150°C.

34. Composition selon l'une des revendications 1 à 33, caractérisée par le fait qu'elle est obtenue selon un procédé dans lequel on opère en outre après l'étape de calcination un broyage et une sèlection granulométrique.

35. Composition de polissage telle que préparée selon l'une des revendications 1 à 34 caractérisée par le fait qu'elle contienne:

de 40 à 99,5% en poids d'oxyde cérique

de O,5 à 60% en poids d'oxydes de terres rares

36. Composition selon la revendication 35, caractérisée par le fait qu'elle contienne:

de 85 à 98% en poids d'oxyde cérique

de 2 à 15% en poids d'oxydes de terres rares

37. Composition selon l'une des revendications 35 et 36 caractérisée par le fait que l'oxyde de terre rare est le sesquioxyde de lanthane.

38. Composition de polissage telle que préparée selon l'une des revendications 1 à 34 caractérisée par le fait qu'elle présente une surface spécifique se situant entre 3 et 8 $m^2/g$.

39. Composition de polissage telle que préparée selon l'une des revendications 1 à 34 caractérisée par le fait qu'elle présente des agrégats ayant un diamètre moyen variant entre O,5 et l,5 µm.

40. Procédé de préparation de la composition de polissage selon l'une des revendications 1 à 39 caractérisé par le fait qu'il consiste:

à mélanger simultanément, en continu, une solution de sel de cérium, une solution d'une base choisie dans le groupe formé par l'ammoniaque, l'hydroxyde de sodium et de potassium et une solution d'au moins un sel d'une terre rare trivalente choise dans le groupe constitué par les lanthanides et l'yttrium et dont l'oxyde n'est pas coloré: le nombre l'équivalents basiques mis en oeuvre étant supérieur ou égal au nombre d'equivalents cérium et terre(s) rare(s) et le pH du milieu réactionnel étant superieur à 6;

à filtrer le précipité obtenu

à le sécher,

à le calciner.

41. Procédé selon la revendication 40, caractérisé par le fait que la solution de sel de cérium est une solution aqueuse de chlorure céreux, de nitrate céreux, de nitrate cérique ou de leur mélange.

42. Procédé selon l'une des revendications 40 et 41, caractérisé par le fait que l'on introduit le cérium dans le milieu réactionnel à l'état céreux et on l'oxyde à l'état cérique en ajoutant en continu au milieu réactionnel, soit isolément, soit en mélange avec une solution autre que celle contenant la base, un agent oxydant.

43. Procédé selon la revendication 40 caractérisé par le fait que la solution aqueuse de sel d'au moins une terre rare trivalente est choisie parmi le groupe constitué par les chlorures ou les nitrates de lanthane, samarium, europium, gadolinium, dysprosium, thulium, ytterbium, lutécium et d'yttrium.

44. Procédé selon l'une des revendications 40 à 43, caractérisé par le fait que le pH du milieu réactionnel est compris entre 6 et 10.

45. Procédé selon la revendication 44, caractérisé par le fait que le pH du milieu réactionnel est compris entre 7 et 9.

46. Procédé selon l'une des revendications 44 et 45, caractérisé par le fait que le pH du milieu réactionnel est réglé dans ces limites à une valeur constante à ± O,1 unité de pH.

47. Procédé selon l'une des revendications 40 à 46, caractérisé par le fait que le temps de séjour du mélange dans le milieu réactionnel est compris entre environ 30 minutes et 2 heures.

48. Procédé selon l'une des revendications 40 à 47, caractérisé par le fait que la température du milieu réactionnel est comprise entre 10 et 95°C.

49. Procédé selon la revendication 48, caractérisé par le fait que la température du milieu réactionnel est comprise entre 20 et 70°C.

50. Procédé selon l'une des revendications 40 à 49, caractérisé par le fait que l'on opère le mûrissement

16

**0 126 675**

de la masse reactionnelle avant l'opération de filtration à une temperature comprise entre 10 et 95°C pendant un temps pouvant aller de 30 minutes à 2 heures.

51. Procédé selon la revendication 50, caractérisé par le fait que la température de mûrissement est comprise entre 20 et 80°C.

52. Procédé selon l'une des revendications 40 à 51, caractérisé par le fait que l'on effectue un lavage du gâteau de filtration avec de l'eau: la teneur en eau du gâteau est comprise après ce lavage entre environ 20 et 80 % en poids.

53. Procédé selon l'une des revendications 40 à 52 caractérisé par le fait que l'on effectue l'étape de séchage éventuellement en continu, à une température comprise entre environ 100 et 600°C pendant une durée de 30 minutes à 2 heures.

54. Procédè selon l'une des revendications 40 à 53, caractérisé par le fait que l'on effectue l'étape de calcination, éventuellement en continu, à une température comprise entre environ 600 et 1200°C pendant une durée d'environ 30 minutes à 10 heures.

55. Procédé selon la revendication 54 caractérisé par le fait que la température de calcination est comprise entre 950° et 1150°C.

56. Procédé selon l'une des revendications 40 à 55, caractérisé par le fait que l'on opère en outre après l'étape de calcination un broyage et une sélection granulométrique.

57. Utilisation d'une composition selon l'une des revendications 1 à 39 comme agent de polissage, dans l'industrie du verre.

58. Utilisation d'une composition selon l'une des revendications 1 à 39 comme agent de polissage, des écrans de télévision.

59. Utilisation d'une composition selon l'une des revendications 1 à 39 comme agent de polissage, dans le domaine de la lunetterie de prescription.

60. Utilisation d'une composition selon l'une des revendications 1 à 39 caractérisée par le fait que la concentration de la composition de polissage exprimée en $CeO_2$ varie de 30 à 200 g par litre de bain.

61. Utilisation d'une composition de polissage selon l'une des revendications 1 à 39 après usage comme source d'oxyde cérique dans l'industrie du verre.

62. Utilisation d'une composition de polissage selon l'une des revendications 1 à 39 après usage comme source d'oxyde cérique dans les écrans de télévision.

**Patentansprüche**

1. Poliermischung auf Cerbasis, geeignet, im Glas wiederverwendet zu werden und durch ein Verfahren hergestellt, das darin besteht, daß

gleichzeitig und kontinuierlich eine Cersalzlösung, eine Lösung einer der Basen Ammoniak, Natriumhydroxid und Kaliumhydroxid und eine Lösung mindestens eines Salzes einer dreiwertigen seltenen Erde aus der durch die Lanthanide und Yttrium gebildeten Gruppe, deren Oxid nicht gefärbt ist, gemischt wird, wobei die Zahl der verwendeten Grammäquivalente Base größer oder gleich der Zahl der Grammäquivalente Cer und seltene Erde(n) und der pH-Wert des Reaktionsgemisches größer als 6 ist,

der erhaltene Niederschlag filtriert,

getrocknet,

und kalziniert wird.

2. Mischung nach patentanspruch 1, dadurch gekennzeichnet, daß sie durch ein Verfahren hergestellt wird, in dem die Cersalzlösung eine wässrige Cer(III)-Chlorid-, Cer(III)-Nitrat-, Cer(IV)-Nitratlösung oder die Lösung eines Gemisches davon ist.

3. Mischung nach einem der Patentansprüche 1 und 2, dadurch gekennzeichnet, daß sie durch ein Verfahren hergestellt wird, in dem die Konzentration der Cersalzlösung zwischen O,2 und 4 Mol/Liter beträgt.

4. Mischung nach einem der Patentansprüche 1 bis 3, dadurch gekennzeichnet, daß sie durch ein Verfahren hergestellt wird, in dem das Cer als Cer(III) in das Reaktionsgemisch eingebracht und zu Cer(IV) oxydiert wird, indem dem Reaktionsgemisch kontinuierlich, einzeln oder mit einer anderen Lösung, als der Basenlösung gemischt, ein Oxydationsmittel zugesetzt wird.

5. Mischung nach Patentanspruch 4, dadurch gekennzeichnet, daß sie durch ein Verfahren hergestellt wird, in dem die Oxydationsmittellösung aus der Gruppe stammt, die umfaßt: Lösungen von Natrium-, Kalium- oder Ammoniumperchlorat,- chlorat, -hypochlorit,- persulfat; Wasserstoffperoxid; Luft; Sauerstoff, Ozon oder elektrochemische Oyydation.

6. Mischung nach einem der Patentansprüche 4 und 5, dadurch gekennzeichnet, daß das Oxydationsmittel in Bezug auf die Stöchiometrie um ca. 10 bis 40 % im Überschuß zum Cer(III)-Salz ist.

7. Mischung nach Patentanspruch 1, dadurch gekennzeichnet, daß dem Reaktionsgemisch kontinuierlich, einzeln oder mit einer anderen Lösung gemischt, die wässrige Lösung eines Salzes mindestens einer dreiwertigen seltenen Erde aus der durch die Lanthanide und Yttrium gebildeten Gruppe hinzugefügt wird.

8. Mischung nach Patentanspruch 7, dadurch gekennzeichnet, daß die wässrige Lösung eines Salzes mindestens einer dreiwertigen seltenen Erde aus der Gruppe der Chloride oder Nitrate von Lanthan,

17

Samarium, Europium, Gadolinium, Dysprosium, Thulium, Ytterbium, Lutetium und Yttrium gewählt wird.

9. Mischung nach einem der Patentansprüche 7 und 8, dadurch gekennzeichnet, daß die Konzentration der wässrigen Lösung von Salz(en) einer oder mehrerer dreiwertiger seltener Erden zwischen 0,2 und 4 Mol pro Liter liegt.

10. Mischung nach Patentanspruch 1, dadurch gekennzeichnet, daß ein Überschuß größer als ungefähr 5 % der Grammäquivalente Base im Vergleich zu den Grammäquivalenten Cer und seltene Erde(n) verwendet wird.

11. Mischung nach einem der Patentansprüche 1 und 10, dadurch gekennzeichnet, daß der pH-Wert des Reaktionsgemisches zwischen 6 und 10 liegt.

12. Mischung nach Patentanspruch 11, dadurch gekennzeichnet, daß der pH-Wert des Reaktionsgemisches zwischen 7 und 9 liegt.

13. Mischung nach einem der Patentansprüche 11 und 12, dadurch gekennzeichnet, daß sie durch ein Verfahren hergestellt wird, in dem der pH-Wert des Reaktionsgemisches auf einen bis auf ± 0,1 pH-Wert-Einheiten konstanten Wert innerhalb dieser Grenzen geregelt ist.

14. Mischung nach einem der Patentansprüche 1 bis 13, dadurch gekennzeichnet, daß sie durch ein Verfahren hergestellt wird, in dem die Zeit, während der die Mischung im Reaktionsgemisch verbleibt, zwischen ungefähr 30 Minuten und 2 Stunden liegt.

15. Mischung nach einem der Patentansprüche 1 bis 14, dadurch gekennzeichnet, daß sie durch ein Verfahren hergestellt wird, in dem die Temperatur des Reaktionsgemisches zwischen 10° und 95°C liegt.

16. Mischung nach Patentanspruch 15, dadurch gekennzeichnet, daß die Temperatur des Reaktionsgemisches zwischen 20° und 70°C liegt.

17. Mischung nach einem der Patentansprüche 1 bis 16, dadurch gekennzeichnet, daß sie durch ein Verfahren hergestellt wird, in dem die Reifung des Reaktionsgemisches vor dem Filtrieren bei einer Temperatur zwischen 10° und 95°C während 30 Minuten bis 2 Stunden durchgeführt wird.

18. Mischung nach Patentanspruch 17, dadurch gekennzeichnet, daß die Reifungstemperatur zwischen 20° und 80°C liegt.

19. Mischung nach einem der Patentansprüche 1 bis 18, dadurch gekennzeichnet, daß sie durch ein Verfahren hergestellt wird, in dem der Filterkuchen mit Wasser gewaschen wird; der Wassergehalt des Filterkuchens liegt nach dieser Waschung zwischen ungefähr 20 und 80 Gewichtsprozent.

20. Mischung nach einem der Patentansprüche 1 bis 14, dadurch gekennzeichnet, daß sie durch ein Verfahren hergestellt wird, das darin besteht, daß in einem Gang (1) gleichzeitig und kontinuierlich bei einer Temperatur zwischen 40° und 95°C eine Cersalzlösung, eine Lösung einer der Basen Ammoniak, Natriumhydroxid und Kaliumhydroxid und eine Lösung mindestens eines Salzes einer dreiwertigen seltenen Erde aus der durch die Lanthanide und Yttrium gebildeten Gruppe, deren Oxid nicht gefärbt ist, gemischt wird, wobei die Zahl der verwendeten Grammäquivalente Base größer ist, als die der Grammäquivalente Cer und seltene Erde(n) und der pH-Wert des Reaktionsgemisches größer als 6,

in einem Gang (2) gleichzeitig und kontinuierlich bei einer Temperatur zwischen 10° und 25°C eine Cersalzlösung, eine Lösung einer der Basen Ammoniak, Natriumhydroxid und Kaliumhydroxid und eine Lösung mindestens eines Salzes einer dreiwertigen seltenen Erde aus der durch die Lanthanide und Yttrium gebildeten Gruppe, deren Oxid nicht gefärbt ist, gemischt wird, wobei die Zahl der verwendeten Grammäquivalente Base grösser ist, als die der Grammäquivalente Cer und seltene Erde(n) und der pH-Wert des Reaktiongsgemisches größer als 6,

die in Gang (1) und Gang (2) erhaltenen Niederschläge vor oder nach der Filtrierung gemischt werden, die erhaltene Mischung getrocknet und kalziniert wird.

21. Mischung nach einem der Patentansprüche 1 bis 14 und 20, dadurch gekennzeichnet, daß sie durch ein Verfahren hergestellt wird, in dem die Temperatur des Reaktionsgemisches entsprechend Gang (1) zwischen 40° und 60°C liegt.

22. Mischung nach einem der Patentansprüche 1 bis 14, 20 und 21, dadurch gekennzeichnet, daß sie durch ein Verfahren hergestellt wird, in dem die Temperatur des Reaktionsgemisches entsprechend Gang (2) im Bereich von 20°C liegt.

23. Mischung nach einem der Patentansprüche 1 bis 14 und 20 bis 22, dadurch gekennzeichnet, daß sie durch ein Verfahren hergestellt wird, in dem die Reifung des in Gang (1) und Gang (2) erhaltenen Reaktionsgemisches oder eines durch Mischung der beiden entstandenen Gemische bei einer Temperatur zwischen 10° und 95°C während 30 Minuten bis 2 Stunden durchgeführt wird.

24. Mischung nach Patentanspruch 23, dadurch gekennzeichnet, daß sie durch ein Verfahren hergestellt wird, in dem die Reifungstemperatur zwischen 20° und 70°C liegt.

25. Mischung nach einem der Patentansprüche 1 bis 14 und 20 bis 24, dadurch gekennzeichnet, daß sie durch ein Verfahren hergestellt wird, in dem die zwei wässrigen Suspensionen der in den Gängen (1) und (2) erhaltenen Niederschläge vor oder nach der Reifung derart gemischt werden, daß der Anteil des in Gang (2) erhaltenen Niederschlages 10 bis 75% des Gesamtgewichts an seltenen Erden, ausgedrückt in Oxiden, in die endgültige Mischung einbringt.

26. Mischung nach Patentanspruch 25, dadurch gekennzeichnet, daß sie durch ein Verfahren hergestellt wird, in dem die zwei wässrigen Suspensionen der in den Gängen (1) und (2) erhaltenen Niederschläge vor oder nach der Reifung derart gemischt werden, daß der Anteil des in Gang (2) erhaltenen Niederschlages 25 bis 75% des Gesamtgewichts an seltenen Erden, ausgedrückt in Oxiden, in die endgültige Mischung einbringt.

27. Mischung nach einem der Patentansprüche 1 bis 14 und 20 bis 26, dadurch gekennzeichnet, daß sie durch ein Verfahren hergestellt wird, in dem die Mischung der wässrigen Suspensionen der in den Gängen (1) und (2) erhaltenen Niederschläge eventuell kontinuierlich bei Raumtemperatur filtriert wird oder daß die wässrigen Suspensionen der in den Gängen (1) und (2) erhaltenen Niederschläge getrennt filtriert werden.

28. Mischung nach Patentanspruch 27, dadurch gekennzeichnet, daß sie durch ein Verfahren hergestellt wird, in dem der Filterkuchen mit Wasser gewaschen wird; der Wassergehalt des Filterkuchens liegt nach dieser Waschung zwischen ungefähr 20 und 80 Gewichtsprozent.

29. Mischung nach einem der Patentansprüche 1 bis 14, 20 bis 24, 27 und 28, dadurch gekennzeichnet, daß sie durch ein Verfahren hergestellt wird, in dem die in den Gängen (1) und (2) erhaltenen, getrennt filtrierten und eventuell gewaschenen Niederschläge derart gemischt werden, daß der Anteil des in Gang (2) erhaltenen Niederschlags 10 bis 75% des Gesamtgewichts an seltenen Erden, ausgedrückt in Oxiden, in die endgültige Mischung einbringt.

30. Mischung nach Patentanspruch 29, dadurch gekennzeichnet, daß sie durch ein Verfahren hergestellt wird, in dem die in den Gängen (1) und (2) erhaltenen, getrennt filtrierten und eventuell gewaschenen Niederschläge derart gemischt werden, daß der Anteil des in Gang (2) erhaltenen Niederschlags 25 bis 75% des Gesamtgewichts an seltenen Erden, ausgedrückt in Oxiden, in die endgültige Mischung einbringt.

31. Mischung nach einem der Patentansprüche 1 bis 30, dadurch gekennzeichnet, daß sie durch ein Verfahren hergestellt wird, in dem die Trocknung eventuell kontinuierlich bei einer Temperatur zwischen ungefähr 100° und 600°C während 30 Minuten bis 2 Stunden durchgeführt wird.

32. Mischung nach einem der Patentansprüche 1 bis 31, dadurch gekennzeichnet, daß sie durch ein Verfahren hergestellt wird, in dem die Kalzinierung eventuell kontinuierlich bei einer Temperatur zwischen ungefähr 600° und 1200°C während ungefähr 30 Minuten bis 10 Stunden durchgeführt wird.

33. Mischung nach Patentanspruch 32, dadurch gekennzeichnet, daß sie durch ein Verfahren hergestellt wird, in dem die Temperatur der Kalzinierung zwischen ungefähr 950° und 1150°C liegt.

34. Mischung nach einem der Patentansprüche 1 bis 33, dadurch gekennzeichnet, daß sie durch ein Verfahren hergestellt wird, in dem darüber hinaus nach der Kalzinierung ein Mahlvorgang und eine granulometrische Auslese durchgeführt werden.

35. Poliermischung der Art, wie sie nach einem der Patentansprüche 1 bis 34 hergestellt wird, dadurch gekennzeichnet, daß sie

40 bis 99,5 Gewichtsprozent Ceroxid,

0,5 bis 60 Gewichtsprozent Oxide seltener Erden enthält.

36. Mischung nach Patentanspruch 35, dadurch gekennzeichnet, daß sie

85 bis 98 Gewichtsprozent Ceroxid,

2 bis 15 Gewichtsprozent Oxide seltener Erden enthält.

37. Mischung nach einem der Patentansprüche 35 und 36, dadurch gekennzeichnet, daß das Oxid einer seltenen Erde Dilanthantrioxid ist.

38. Poliermischung der Art, wie sie nach einem der Patentansprüche 1 bis 34 hergestellt wird, dadurch gekennzeichnet, daß sie eine spezifische Oberfläche zwischen 3 und 8 m$^2$/g aufweist.

39. Poliermischung der Art, wie sie nach einem der Patentansprüche 1 bis 34 hergestellt wird, dadurch gekennzeichnet, daß sie Teilchen mit einem mittleren Durchmesser zwischen 0,5 und 1,5 μm aufweist.

40. Verfahren zur Herstellung der Poliermischung nach einem der Patentansprüche 1 bis 39, dadurch gekennzeichnet, daß

gleichzeitig und kontinuierlich eine Cersalzlösung, eine Lösung einer der Basen Ammoniak, Natriumhydroxid und Kaliumhydroxid und eine Lösung mindestens eines Salzes einer dreiwertigen seltenen Erde aus der durch die Lanthanide und Yttrium gebildeten Gruppe, deren Oxid nicht gefärbt ist, gemischt wird, wobei die Zahl der verwendeten Grammäquivalente Base größer oder gleich der Zahl der Grammäquivalente Cer und seltene Erde(n) und der pH-Wert des Reaktionsgemisches größer als 6 ist,

der erhaltene Niederschlag filtriert,

getrocknet

und kalziniert wird.

41. Verfahren nach Patentanspruch 40, dadurch gekennzeichnet, daß die Cersalzlösung eine wässrige Cer(III)-Chlorid-, Cer(III)-Nitrat- oder Cer(IV)Nitratlösung oder eine Lösung eines Gemisches davon ist.

42. Verfahren nach einem der Patentansprüche 40 und 41, dadurch gekennzeichnet, daß das Cer als Cer(III) in das Reaktionsgemisch eingebracht und zu Cer(IV) oxydiert wird, indem dem Reaktionsgemisch kontinuierlich, einzeln oder mit einer anderen Lösung als der Basenlösung gemischt, ein Oxydationsmittel zugesetzt wird.

43. Verfahren nach Patentanspruch 40, dadurch gekennzeichnet, daß die wässrige Lösung eines Salzes mindestens einer dreiwertigen seltenen Erde aus der Gruppe der Chloride oder Nitrate von Lanthan, Samarium, Europium, Gadolinium, Dysprosium, Thulium, Ytterbium, Lutetium und Yttrium gewählt wird.

44. Verfahren nach einem der Patentansprüche 40 bis 43, dadurch gekennzeichnet, daß der pH-Wert des Reaktionsgemisches zwischen 6 und 10 liegt.

# 0 126 675

45. Verfahren nach Patentanspruch 44, dadurch gekennzeichnet, daß der pH-Wert des Reaktionsgemisches zwischen 7 und 9 liegt.

46. Verfahren nach einem der Patentansprüche 44 und 45, dadurch gekennzeichnet, daß der pH-Wert des Reaktionsgemisches auf einen bis auf ± 0,1 pH-Wert-Einheiten konstanten Wert innerhalb dieser Grenzen geregelt ist.

47. Verfahren nach einem der Patentansprüche 40 bis 46, dadurch gekennzeichnet, daß die Zeit, während der die Mischung im Reaktionsgemisch verbleibt, zwischen ungefähr 30 Minuten und 2 Stunden liegt.

48. Verfahren nach einem der Patentansprüche 40 bis 47, dadurch gekennzeichnet, daß die Temperatur des Reaktionsgemisches zwischen 10° und 95°C liegt.

49. Verfahren nach patentanspruch 48, dadurch gekennzeichnet, daß die Temperatur des Reaktionsgemisches zwischen 20° und 70°C liegt.

50. Verfahren nach einem der Patentansprüche 40 bis 49, dadurch gekennzeichnet, daß die Reifung des Reaktionsgemisches vor dem Filtrieren bei einer Temperatur zwischen 10° und 95°C während 30 Minuten bis 2 Stunden durchgeführt wird.

51. Verfahren nach Patentanspruch 50, dadurch gekennzeichnet, daß die Reifungstemperatur zwischen 20° und 80°C liegt.

52. Verfahren nach einem der Patentansprüche 40 bis 51, dadurch gekennzeichnet, daß der Filterkuchen mit Wasser gewaschen wird; der Wassergehalt des Filterkuchens liegt nach dieser Waschung zwischen ungefähr 20 und 80 Gewichtsprozent.

53. Verfahren nach einem der Patentansprüche 40 bis 52, dadurch gekennzeichnet, daß die Trocknung eventuell kontinuierlich bei einer Temperatur zwischen ungefähr 100° und 600°C während 30 Minuten bis 2 Stunden durchgeführt wird.

54. Verfahren nach einem der Patentansprüche 40 bis 53, dadurch gekennzeichnet, daß die Kalzinierung eventuell kontinuierlich bei einer Temperatur zwischen ungefähr 600° und 1200°C während ungefähr 30 Minuten bis 10 Stunden durchgeführt wird.

55. Verfahren nach Patentanspruch 54, dadurch gekennzeichnet, daß die Temperatur der Kalzinierung zwischen ungefähr 950° und 1150°C liegt.

56. Verfahren nach einem der Patentansprüche 40 bis 55, dadurch gekennzeichnet, daß darüber hinaus nach der Kalzinierung ein Mahlvorgang und eine granulometrische Auslese durchgeführt werden.

57. Verwendung einer Mischung nach einem der Patentansprüche 1 bis 39 als Poliermittel in der Glasindustrie.

58. Verwendung einer Mischung nach einem der Patentansprüche 1 bis 39 als poliermittel für Fernsehbildschirme.

59. Verwendung einer Mischung nach einem der Patentansprüche 1 bis 39 als Poliermittel im Bereich der Augenoptik.

60. Verwendung einer Mischung nach einem der Patentansprüche 1 bis 39, dadurch gekennzeichnet, daß die Konzentration der Poliermischung, ausgedrückt in $CeO_2$, zwischen 30 und 200 g pro Liter des Bades liegt.

61. Verwendung einer Poliermischung nach einem der Patentansprüche 1 bis 39 nach dem Gebrauch als Ceroxidquelle in der Glasindustrie.

62. Verwendung einer Poliermischung nach einem der Patentansprüche 1 bis 39 nach dem Gebrauch als Ceroxidquelle für Fernsehbildschirme.

## Claims

1. Cerium-based polishing composition capable of being recycled in glass, which composition is obtained according to a process which consists in:

mixing, simultaneously and continuously, a solution of cerium salt, a solution of a base which is chosen from the group formed by aqueous ammonia, sodium hydroxide and potassium hydroxide, and a solution of at least one salt of a trivalent rare earth which is chosen from the group consisting of the lanthanides and yttrium and the oxide of which is colourless, the number of basic equivalents used being greater than or equal to the number of equivalents of cerium and rare earth(s) and the pH of the reaction medium being greater than 6;

filtering off the precipitate obtained,

drying it, and

calcining it.

2. Composition according to Claim 1, characterized in that it is obtained according to a process in which the solution of cerium salt is an aqueous solution of cerous chloride, cerous nitrate, ceric nitrate or a mixture thereof.

3. Composition according to either of Claims 1 and 2, characterized in that it is obtained according to a process in which the concentration of the solution of cerium salt is between 0.2 and 4 moles per litre.

4. Composition according to one of Claims 1 to 3, characterized in that it is obtained according to a process in which the cerium is introduced into the reaction medium in the cerous state and it is oxidized to the ceric state by the continuous addition of an oxidizing agent to the reaction medium, either in isolation or as a mixture with a solution other than that containing the base.

5. Composition according to Claim 4, characterized in that it is obtained according to a Process in which the oxidizing agent solution is chosen from the group comprising solutions of sodium, potassium or ammonium perchlorate, chlorate, hypochlorite or persulphate, hydrogen peroxide, air, oxygen, ozone or electrochemical oxidation.

6. Composition according to either of Claims 4 and 5, characterized in that the proportion of oxidizing agent relative to the cerous salt is in excess of about 10 to 40%, compared with the stoichiometric proportion.

7. Composition according to Claim 1, characterized in that the aqueous solution of a salt of at least one trivalent rare earth chosen from the group consisting of the lanthanides and yttrium is introduced continuously into the reaction medium, either in isolation or as a mixture with another solution.

8. Composition according to Claim 7, characterized in that the aqueous solution of a salt of at least one trivalent rare earth is chosen from the group consisting of the chlorides or nitrates of lanthanum, samarium, europium, gadolinium, dysprosium, thulium, ytterbium, lutecium and yttrium.

9. Composition according to either of Claims 7 and 8, characterized in that the concentration of the aqueous solution of salt(s) of trivalent rare earth(s) is between 0.2 and 4 moles per litre.

10. Composition according to Claim 1, characterized in that an excess of more than about 5% of basic equivalents is used, relative to the equivalents of cerium and rare earth(s).

11. Composition according to either of Claims 1 and 10, characterized in that the pH of the reaction medium is between 6 and 10.

12. Composition according to Claim 11, characterized in that the pH of the reaction medium is between 7 and 9.

13. Composition according to either of Claims 11 and 12, characterized in that it is obtained according to a process in which the pH of the reaction medium is adjusted within these limits to a value which is constant to $\pm$ 0.l pH unit.

14. Composition according to one of Claims 1 to 13, characterized in that it is obtained according to a process in which the residence time of the mixture in the reaction medium is between about 30 minutes and 2 hours.

15. Composition according to one of Claims 1 to 14, characterized in that it is obtained according to a process in which the temperature of the reaction medium is between 10 and 95°C.

16. Composition according to Claim 15, characterized in that the temperature of the reaction medium is between 20 and 70°C.

17. Composition according to one of Claims 1 to 16, characterized in that it is obtained according to a process in which the aging of the reaction mixture before the filtration operation is carried out at a temperature of between 10 and 95°C for a time which can range from 30 minutes to 2 hours.

18. Composition according to Claim 17, characterized in that the aging temperature is between 20 and 80°C.

19. Composition according to one of Claims 1 to 18, characterized in that it is obtained according to a process in which a filter cake is washed with water, the water content of the cake being between about 20 and 80% by weight after this washing.

20. Composition according to one of Claims 1 to 14, characterized in that it is obtained according to a process which consists:

according to method (1), in mixing, simultaneously and continuously, at a temperature of between 40 and 95°C, a solution of cerium salt, a solution of a base which is chosen from the group formed by aqueous ammonia, sodium hydroxide and potassium hydroxide, and a solution of at least one salt of a trivalent rare earth which is chosen from the group consisting of the lanthanides and yttrium and the oxide of which is colourless, the number of basic equivalents used being greater than the number of equivalents of cerium and rare earth(s) and the pH of the reaction medium being greater than 6; and

according to method (2), in mixing, simultaneously and continuously at a temperature of between 10 and 25°C, a solution of cerium salt, a solution of a base which is chosen from the group formed by aqueous ammonia, sodium hydroxide and potassium hydroxide, and a solution of at least one salt of a trivalent rare earth which is chosen from the group consisting of the lanthanides and yttrium and the oxide of which is colourless, the number of basic equivalents used being greater than the number of equivalents of cerium and rare earth(s) and the pH of the reaction medium being greater than 6;

in mixing the precipitates obtained according to method (1) and method (2), either before filtration or after filtration;

in drying the mixture obtained; and

in calcining it.

21. Composition according to one of Claims 1 to 14 and 20, characterized in that it is obtained according to a process in which the temperature of the reaction medium is between 40 and 60°C according to method (1).

22. Composition according to one of Claims 1 to 14, 20 and 21, characterized in that it is obtained according to a process in which the temperature of the reaction medium is in the region of 20°C according to method (2).

23. Composition according to one of Claims 1 to 14 and 20 to 22, characterized in that it is obtained

# 0 126 675

according to a process in which the aging of the reaction mixture obtained according to method (1) and method (2), or resulting from the mixing thereof, is carried out at a temperature of between 10 and 95°C for a time which can range from 30 minutes to 2 hours.

24. Composition according to Claim 23, characterized in that it is obtained according to a process in which the aging temperature is between 20 and 70°C.

25. Composition according to one of Claims 1 to 14 and 20 to 24, characterized in that it is obtained according to a process in which the two aqueous suspensions of the precipitates obtained according to methods (1) and (2) are mixed, either before aging or after aging, so that the proportion of the precipitate obtained according to method (2) introduces into the final composition from 10 to 75% of the total weight of the rare earths, expressed as oxides.

26. Composition according to Claim 25, characterized in that it is obtained according to a process in which the two aqueous suspensions of the precipitates obtained according to methods (1) and (2) are mixed, either before aging or after aging, so that the proportion of the precipitate obtained according to method (2) introduces into the final composition from 25 to 75% of the total weight of the rare earths, expressed as oxides.

27. Composition according to one of Claims 1 to 14 and 20 to 26, characterized in that it is obtained according to a process in which the mixture of the aqueous suspensions of the precipitates obtained according to methods (1) and (2) is filtered optionally continuously at ambient temperature, or in that the aqueous suspensions of the precipitates obtained according to methods (1) and (2) are filtered separately.

28. Composition according to Claim 27, characterized in that it is obtained according to a process in which the filter cake is washed with water, the water content of the cake being between about 20 and 80% by weight after this washing.

29. Composition according to one of Claims 1 to 14, 20 to 24 and 27 and 28, characterized in that it is obtained according to a process in which the precipitates obtained according to methods (1) and (2), filtered off and optionally washed separately, are mixed so that the proportion of the Precipitate obtained according to method (2) introduces into the final composition from 10 to 75% of the total weight of the rare earths, expressed as oxides.

30. Composition according to Claim 29, characterized in that it is obtained according to a process in which the precipitates obtained according to methods (1) and (2), filtered off and optionally washed separately, are mixed so that the proportion of the precipitate obtained according to method (2) introduces into the final composition 25 to 75% of the total weight of the rare earths, expressed as oxides.

31. Composition according to one of Claims 1 to 30, characterized in that it is obtained according to a process in which the drying step is carried out optionally continuously, at a temperature of between about 100 and 600°C for a time of 30 minutes to 2 hours.

32. Composition according to one of Claims 1 to 31, characterized in that it is obtained according to a process in which the calcination step is carried out optionally continuously, at a temperature of between about 600 and 1200°C for a time of about 30 minutes to 10 hours.

33. Composition according to Claim 32, characterized in that it is obtained according to a process in which the calcination temperature is between 950° and 1150°C.

34. Composition according to one of Claims 1 to 33, characterized in that it is obtained according to a process in which grinding and particle size selection are additionally carried out after the calcination step.

35. Polishing composition as prepared according to one of Claims 1 to 34, characterized in that it contains:

from 40 to 99.5% by weight of ceric oxide,

from 0.5 to 60% by weight of rare earth oxides.

36. Composition according to Claim 35, characterized in that it contains:

from 85 to 98% by weight of ceric oxide,

from 2 to 15% by weight of rare earth oxides.

37. Composition according to either of Claims 35 and 36, characterized in that the rare earth oxide is lanthanum sesquioxide.

38. Polishing composition as prepared according to one of Claims 1 to 34, characterized in that it has a specific surface area between 3 and 8 $m^2/g$.

39. Polishing composition as prepared according to one of Claims 1 to 34, characterized in that it has aggregates with an average diameter which varies between 0.5 and 1.5 μm.

40. Process for the preparation of the polishing composition according to one of Claims 1 to 39, characterized in that it consists in:

mixing, simultaneously and continuously, a solution of cerium salt, a solution of a base which is chosen from the group formed by aqueous ammonia, sodium hydroxide and potassium hydroxide, and a solution of at least one salt of a trivalent rare earth which is chosen from the group consisting of the lanthanides and yttrium and the oxide of which is colourless, the number of basic equivalents used being greater than or equal to the number of equivalents of cerium and rare earth(s) and the pH of the reaction medium being greater than 6;

filtering off the precipitate obtained

drying it and

calcining it.

0 126 675

41. Process according to Claim 40, characterized in that the solution of cerium salt is an aqueous solution of cerous chloride, cerous nitrate, ceric nitrate or a mixture thereof.

42. Process according to either of Claims 40 and 41, characterized in that the cerium is introduced into the reaction medium in the cerous state and it is oxidized to the ceric state by the continuous addition of an oxidizing agent to the reaction medium, either in isolation or as a mixture with a solution other than that containing the base.

43. Process according to Claim 40, characterized in that the aqueous solution of a salt of at least one trivalent rare earth is chosen from the group comprising the chlorides or nitrates of lanthanum, samarium, europium, gadolinium, dysprosium, thulium, ytterbium, lutecium and yttrium.

44. Process according to one of Claims 40 to 43, characterized in that the pH of the reaction medium is between 6 and 10.

45. Process according to Claim 44, characterized in that the PH of the reaction medium is between 7 and 9.

46. Process according to one of Claims 44 and 45, characterized in that the pH of the reaction medium is adjusted within these limits to a value which is constant to $\pm$ 0.1 pH unit.

47. Process according to one of Claims 40 to 46, characterized in that the residence time of the mixture in the reaction medium is between about 30 minutes and 2 hours.

48. Process according to one of Claims 40 to 47, characterized in that the temperature of the reaction medium is between 10 and 95°C.

49. Process according to Claim 48, characterized in that the temperature of the reaction medium is between 20 and 70°C.

50. Process according to one of Claims 40 to 49, characterized in that the aging of the reaction mixture before the filtration operation is carried out at a temperature of between 10 and 95°C for a time which can range from 30 minutes to 2 hours.

51. Process according to Claim 50, characterized in that the aging temperature is between 20 and 80°C.

52. Process according to one of Claims 40 to 51, characterized in that the filter cake is washed with water, the water content of the cake being between about 20 and 80% by weight after this washing.

53. Process according to one of Claims 40 to 52, characterized in that the drying step is carried out optionally continuously, at a temperature of between about 100 and 600°C for a time of 30 minutes to 2 hours.

54. Process according to one of Claims 40 to 53, characterized in that the calcination step is carried out, optionally continuously, at a temperature of between about 600 and 1200°C for a time of about 30 minutes to 10 hours.

55. Process according to Claim 54, characterized in that the calcination temperature is between 950° and 1150°C.

56. Process according to one of Claims 40 to 55, characterized in that grinding and particle size selection are additionally carried out after the calcination step.

57. Use of a composition according to one of Claims 1 to 39 as a polishing agent in the glass industry.

58. Use of a composition according to one of Claims 1 to 39 as a polishing agent for television screens.

59. Use of a composition according to one of Claims 1 to 39 as a polishing agent in the prescription spectacle field.

60. Use of a composition according to one of Claims 1 to 39, characterized in that the concentration of the polishing composition, expressed as $CeO_2$, varies from 30 to 200 g per litre of bath.

61. Use of a polishing composition according to one of Claims 1 to 39 after use as a source of ceric oxide in the glass industry.

62. Use of a polishing composition according to one of Claims 1 to 39 after use as a source of ceric oxide in television screens.